# EUROPÄISCHE PATENTSCHRIFT

(11) **EP 1 160 914 B1**
(45) Veröffentlichungstag und Bekanntmachung des Hinweises auf die Patenterteilung: **04.08.2004**
(21) Anmeldenummer: 01110540.0
(22) Anmeldetag: 28.04.2001
(51) Int. Cl.: H01Q 1/42, H01Q 1/02, H01Q 1/32

(54) **Radom für ein Abstands-Warn-Radar (AWR)**
Radome for a distance warning radar
Radome pour un dispositif radar de mesure de distance et d'alarme

(30) Priorität: 27.05.2000 DE 10026454
(43) Veröffentlichungstag der Anmeldung: 05.12.2001
(73) Patentinhaber: DaimlerChrysler AG, 70567 Stuttgart (DE)
(72) Erfinder: Zimmermann, Werner, 85640 Putzbrunn (DE)

(56) Entgegenhaltungen:
- EP-A- 0 969 550
- FR-A- 2 755 241
- US-A- 3 805 017
- US-A- 5 528 249

## Beschreibung

Die Erfindung betrifft ein Radom für ein Abstands-Warn-Radar (AWR) in einem Kraftfahrzeug gemäß dem Oberbegriff des Patentanspruchs 1.

Es ist bekannt, AWRs mit einem Radom abzudecken, das in den Kühlergrill eines Kraftfahrzeuges integriert ist und durch eine die Radarstrahlung nicht behindernde, metallische Bedampfung des Radommaterials dem Betrachter den visuellen Eindruck vermittelt, dass der Kühlergrill des Kraftfahrzeuges nicht von einem Radom unterbrochen ist.

Dies erfolgt bekannterweise mittels einer partiellen Bedampfung und durch eine dem Kühlergrill angepasste strukturelle Formgebung des Radommaterials (DE 198 19 709 A1). Nachteilig ist die Möglichkeit von Schnee- oder Eisbildung auf derartigen Radomoberflächen, wodurch sich die Transparenz für die Radarstrahlung erheblich verschlechtert.

Weiterhin ist aus DE 196 44 164 ein Kraftfahrzeug-Radarsystem bekannt, bei dem sich zum Schutz vor Witterungseinflüssen und zur Fokussierung der Strahlung ein dielektrischer Körper (Radom) im Strahlengang der elektromagnetischen Wellen befindet. Um Schmutz und Beläge aus Eis, Schnee und Feuchtigkeit, die sich auf dem Radom ablagern, zu detektieren und zu beseitigen, besitzt das Radom eine Anordnung aus elektrisch leitfähigen Bahnen. Mit ihnen kann das Radom von der Innenseite des AWRs beheizt werden.

Aufgabe der Erfindung ist es, ein Radom mit vorgegebener Bauweise für ein AWR in einem Kraftfahrzeug zu schaffen, auf dem die Bildung von Schnee oder Eisschichten verhindert ist.

Diese Aufgabe wird erfindungsgemäß durch die Merkmale des Patentanspruchs 1 gelöst. Weiterbildungen der Erfindung sind in den Unteransprüchen angegeben.

Die Bildung von Schnee- oder Eisschichten wird erfindungsgemäß durch eine elektrische Beheizung des Radomes vermieden. Die Beheizung des Radomes erfolgt über die aufgedampften, dekorativen Metallschichten, die einen Ohmschen Widerstand aufweisen und sich bei lateraler Hindurchführung eines elektrischen Stromes erwärmen und somit als elektrische Heizleiter wirken.

Mit der erfindungsgemäßen Lösung kann eine Beeinträchtigung der Funktion des AWRs durch Schnee oder Eis verhindert werden. Das erfindungsgemäße Radom lässt sich mit seinem äußeren Erscheinungsbild beliebig seiner Umgebung anpassen und ist deshalb hervorragend für den Einbau in eine Kraftfahrzeugoberfläche mit den speziellen Anforderungen an das Design geeignet.

Anhand der Zeichnung wird ein Ausführungsbeispiel der Erfindung näher erläutert.
- Fig. 1: zeigt ein erfindungsgemäßes Radom,
- Fig. 2: zeigt das elektrische Schaltbild für die Heizung des Radomes und
- Fig. 3: zeigt in geschnittener Ansicht eine Ausbildungsvariante des Radomes in Negativform.

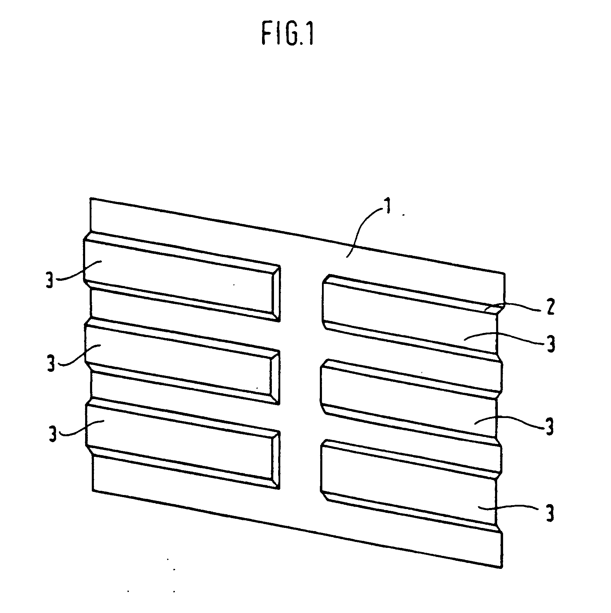

Das in Fig. 1 gezeigte Radom ist in einen Kühlergrill eines Kraftfahrzeuges integriert. Der Kühlergrill selbst ist aus Gründen der zeichnerischen Vereinfachung in Fig.1 nicht gezeigt. Das Radom besteht aus einer radartransparenten Trägerplatte 1 mit geringen dielektrischen Verlusten, beispielsweise aus Polykarbonat. Die Trägerplatte weist ausgeformte Streben 2 auf, die partiell mit einer dünnen Metallschicht 3 - bestehend beispielsweise aus Chrom oder Indium - bedampft sind.

Die metallisch bedampften Streben 2 bilden auf dem Radom visuell gesehen eine Fortsetzung der metallischen Streben des Kühlergrills. Für einen Betrachter des Kühlergrills ist der Unterschied zwischen den echten Metallstreben des Kühlergrills und den bedampften Polykarbonat-Streben des Radomes nicht unmittelbar erkennbar. Abhängig von der Umgebung, in der das Radom 1 integriert ist, können anstelle der Streben 2 andere, angepasste Strukturen in dem Radom 1 ausgeformt sein oder es kann eine glatte Radomoberfläche vorliegen und die sie bedeckenden dünnen Metallschichten 3 können ebenfalls abweichend von der in Fig. 1 gezeigten Ausbildung auf die Umgebung angepasst sein, wobei darauf zu achten ist, dass durch eine geeignete Anordnung der Kontaktierungspunkte für elektrische Leitungen 5 auf den Metallschichten ein lateraler elektrischer Stromfluss durch die Metallschichten 3 möglich ist.

Die radarmäßigen Abbildungseigenschaften des Radomes werden von der dünnen Metallschicht 3 auf den Streben 2 nicht nennenswert beeinträchtigt, da die Metallschicht 3 wegen ihrer geringen Dicke die längerwelligen Radarwellen fast ungeschwächt hindurchtreten lässt, jedoch das kurzwellige, sichtbare Licht vollständig reflektiert. Außerdem ist es bekannt, dass dünne Metallschichten gegenüber einem Festkörper aus Metall einen erhöhten Ohmschen Widerstand aufweisen, der für die erfindungsgemäße Lösung ausgenutzt wird.

Eine geeignete Dicke der dünnen Metallschicht 3, die den optischen, radartechnischen und Ohmschen Anforderungen genügt ist für verschiedene metallische Werkstoffe experimentell ermittelbar; ein Diagramm für aufgesputterte Chromschichten auf Polykarbonat ist dem eingangs genannten Stand der Technik angegeben. Anstelle von Chrom können andere Metalle - z.B. Aluminium - oder Metallverbindungen für die Metallschichten 3 verwendet werden, die z.B. besser der Umgebung des Radomes angepasst sind oder einen vorteilhaften elektrischen Schichtwiderstand aufweisen, so lange dabei die Radar-Transparenz gewährt bleibt. Die Metalle können auf das Radom aufgedampft, gesputtert oder aufgedruckt sein.

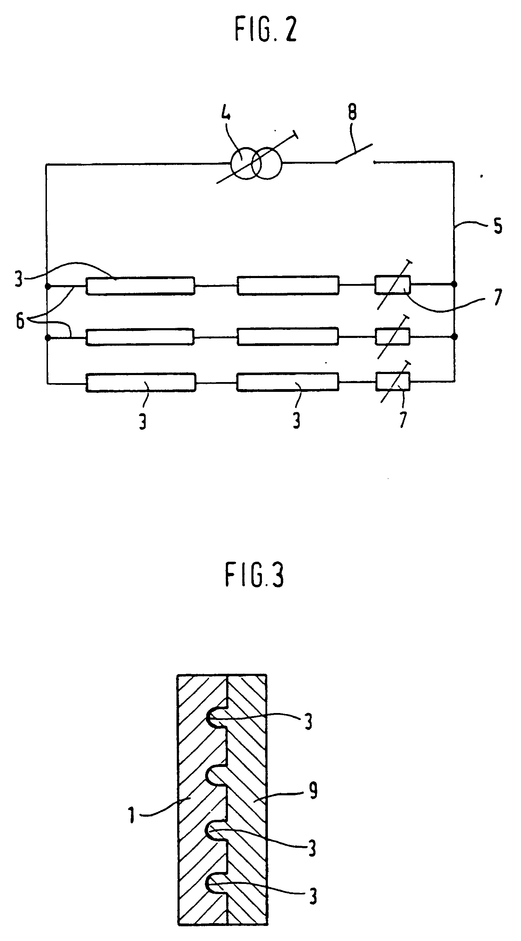

Abweichend von der vorangehend beschriebenen Trägerplatte 1 mit ausgeformten Streben 2 gemäß Fig. 1 kann das Radom beispielsweise auch aus einer Trägerplatte 1 bestehen, die eine glatte äußere Oberfläche aufweist und auf deren Rückseite die Kühlergrillstruktur mit den Streben 2 als Negativform ausgebildet ist; Fig. 3. Diese Negativform ist entsprechend der Kühlergrillstruktur partiell mit dünnen Metallschichten 3 bedampft und kann zusätzlich mit einer Korrekturschicht 9 - bestehend z.B. aus Polykarbonat - hinterspritzt sein, mit der die durch die Negativform hervorgerufene Streuungen und Beugungen des Radarstrahles kompensiert werden. Wie vorangehend beschrieben, dienen auch in dieser Ausführungsform die Metallschichten 3 als elektrische Heizleiter zur Erwärmung des Radomes.

Zum Schutz der Metallschichten 3 gegen korrosiven und mechanischen Einflüssen - gemäß Fig. 1 - oder der glatten Oberfläche der Trägerplatte 1 - gemäß Fig. 3 -ist die äußere Radomoberfläche mit einer dünnen, radartransparenten und wärmeleitenden Schutzschicht aus beispielsweise kratzfestem Lack abgedeckt. Die wärmeleitende Schutzschicht kann z.B. auch eine SiO2-Schicht sein, die beispielsweise in einem CVD-Verfahren aufgebracht worden ist.

Grundsätzlich kann das Radom anstelle der vorangehend beschriebenen einen radartransparenten Trägerplatte 1 auch aus einem mehrschichtigem System von Trägerplatten oder aus einem tiefgezogenen Foliensystem mit der Struktur des Kühlergrills und maskierenden Lackschichten bestehen, dass auf seiner Vorderseite die visuell erkennbaren Metallschichten 3 aufweist.

Wie Fig. 2 zeigt, erfolgt die Beheizung des Radomes mittels einer einstellbaren, elektrischen Stromquelle 4, die in die Metallschichten 3 der Streben 2 einen elektrischen Strom einspeist. Dazu sind die Metallschichten 3 mit elektrischen Leitungen 5 kontaktiert. Die Kontaktierung erfolgt mittels aus der Dünnschicht-Technologie bekannten Löt- oder Schweißverbindungen.

Die Einspeisung des Stromes erfolgt beispielsweise in einer elektrischen Paralellschaltung. In den elektrischen Parallelzweigen 6 können mehrere Metallschichten 3 elektrisch hintereinandergeschaltet sein; im gezeigten Ausführungsbeispiel sind dies zwei Metallschichten.

Zur Kompensation von fertigungsbedingt unterschiedlichen Ohmschen Widerständen der Metallschichten 3 kann bei Bedarf in jedem Parallelzweig 6 ein einstellbarer elektrischer Widerstand 7 in die entsprechenden elektrischen Leitungen 6 integriert sein. Ein elektrischer Schalter 8 dient zum Ein- und Ausschalten der Radomheizung. Dieser Schalter 8 kann auch automatisch - z.B. in Abhängigkeit von der Radomtemperatur - gesteuert werden, wozu entsprechend bekannte Sensor- und Auswertemittel verwendet werden können.

## Patentansprüche

1. Radom für ein Abstands-Warn-Radar (AWR) in einem Kraftfahrzeug mit auf der Oberfläche des Radomes aufgebrachten dünnen radartransparenten Metallschichten zur visuellen Anpassung des Radomes an seine umgebende Kraftfahrzeugoberfläche, **dadurch gekennzeichnet, dass** die dünnen Metallschichten (3) einen Ohmschen Widerstand aufweisen und dass mittels einer elektrischen Stromquelle (4) zur Heizung des Radomes in die Metallschichten (3) ein elektrischer Strom eingeprägt ist, der die Metallschichten (3) lateral durchströmt und dass in der elektrischen Schaltung zur Stromeinspeisung einstellbare elektrische Widerstände (7) vorgesehen sind, mit denen fertigungsbedingte Unterschiede in den Ohmschen Widerständen der Metallschichten (3) kompensiert werden.

2. Radom nach Anspruch 1, **dadurch gekennzeichnet, dass** ein automatisch gesteuerter elektrischer Schalter (8) zum Ein- und Ausschalten der Heizung vorgesehen ist, der in Abhängigkeit von der Radomtemperatur gesteuert ist.

3. Radom nach Anspruch 1 oder 2, **dadurch gekennzeichnet, dass** die Metallschichten (3) mit einer Schutzschicht gegen äußere korrosive und mechanische Beschädigungen abgedeckt sind, die radar- und visuell transparent ist.

4. Radom nach Anspruch 3, **dadurch gekennzeichnet, dass** es sich bei der Schutzschicht um einen kratzfesten Lack handelt.

5. Radom nach Anspruch 3, **dadurch gekennzeichnet, dass** es sich bei der Schutzschicht um eine SiO2-Schicht handelt.

## Claims

1. Radome for a proximity radar warning system (PRWS) in a motor vehicle, with thin radar-transparent metallic layers applied to the surface of the radome for matching the radome to the surrounding motor vehicle surface, **characterised in that** the thin metallic layers (3) have an ohmic resistance, **in that** an electric current to heat the radome is impressed into the metallic layers (3) by means of a power source (4) and laterally flows through the metallic layers (3), and **in that** adjustable resistors (7) are provided in the power supply circuit to compensate for differences in the ohmic resistances of the metallic layers (3) due to manufacturing.

2. Radome according to claim 1, **characterised in that** an automatically controlled electrical switch (8) for switching the heating on and off is provided, which is controlled in dependence on the temperature of the radome.

3. Radome according to claim 1 or 2, **characterised in that** the metallic layers (3) are covered by a radar- and visually transparent protective coating against external corrosive and mechanical damage.

4. Radome according to claim 3, **characterised in that** the protective coating is a paint resistant to scratching.

5. Radome according to claim 3, **characterised in that** the protective coating is an SiO2 coating.

## Revendications

1. Radome pour un dispositif de radar de mesure de distance et d'alarme dans un véhicule avec des couches de métal transparentes pour le radar, minces et appliquées sur la surface du radome, pour l'adaptation visuelle du radome à sa surface automobile environnante, **caractérisé en ce que** les couches de métal (3) minces présentent une résistance ohmique et **en ce qu'**un courant électrique, qui traverse latéralement les couches métalliques (3) est introduit dans les couches métalliques (3), au moyen de la source du courant électrique (4) pour le chauffage de radome, et **en ce qu'**il est prévu dans le circuit électrique, pour l'alimentation en courant, des résistances (7) électriques réglables, avec lesquelles les différences consécutives à la fabrication dans les résistances ohmiques des couches métalliques (3) sont compensées.

2. Radome selon la revendication 1, **caractérisé en ce qu'**un commutateur (8) électrique commandé automatiquement est prévu pour la mise en route et l'arrêt du chauffage et est commandé en fonction de la température du radome.

3. Radome selon la revendication 1 ou 2, **caractérisé en ce que** les couches métalliques (3) sont revêtues avec une couche de protection contre des détériorations corrosives et mécaniques extérieures, qui est transparente vis-à-vis du radar et visuellement.

4. Radome selon la revendication 3, **caractérisé en ce qu'**il s'agit d'un vernis résistant aux rayures en ce qui concerne la couche de protection.

5. Radome selon la revendication 3, **caractérisé en ce qu'**il s'agit d'une couche de SiO2 en ce qui concerne la couche de protection.
